# EUROPÄISCHE PATENTSCHRIFT

(11) **EP 1 317 181 B1**
(45) Veröffentlichungstag und Bekanntmachung des Hinweises auf die Patenterteilung: **28.04.2004**
(21) Anmeldenummer: 01962984.9
(22) Anmeldetag: 30.08.2001
(51) Int. Cl.: A01N 47/36

(54) **VERFAHREN ZUR HERSTELLUNG EINER HERBIZIDEN FESTFORMULIERUNG**
METHOD FOR PRODUCING A SOLID HERBICIDE FORMULATION
PROCEDE DE PREPARATION D'UNE COMPOSITION HERBICIDE SOLIDE

(30) Priorität: 31.08.2000 DE 10043122
(43) Veröffentlichungstag der Anmeldung: 11.06.2003
(73) Patentinhaber: BASF AKTIENGESELLSCHAFT, 67056 Ludwigshafen (DE)
(72) Erfinder: JÄGER, Karl-Friedrich, 67117 Limburgerhof (DE); ZAGAR, Cyrill, 68167 Mannheim (DE)
(86) Internationale Anmeldenummer: PCT/EP2001/010001
(87) Internationale Veröffentlichungsnummer: WO 2002/017718

(56) Entgegenhaltungen:
- EP-A- 0 124 295
- EP-A- 0 764 404
- WO-A-98/34482
- WO-A-98/42192
- HAY J V: "CHEMISTRY OF SULFONYLUREA HERBICIDES" PESTICIDE SCIENCE, ELSEVIER APPLIED SCIENCE PUBLISHER. BARKING, GB, Bd. 29, Nr. 3, 1990, Seiten 247-261, XP000202810 ISSN: 0031-613X

## Beschreibung

Die vorliegende Erfindung betrifft ein Verfahren zur Herstellung einer herbiziden Festformulierung auf der Basis von Sulfonylharnstoffen mit ggf. weiteren Herbiziden und ggf. Safenern sowie Formulierungshilfsstoffen.

Sulfonylharnstoffe mit herbizider Wirkung sind aus dem Stand der Technik, z.B. aus EP-388 873, EP-559 814, EP-291 851 und DE-40 07 683 und den Conference Proccedings "Fluorine in Agriculture", 9.-11- Januar 1995, Manchester, Kap. "New Fluoro Intermediates for Herbicidal Sulfonylureas" bekannt.

Zu dieser allgemeinen Stoffklasse gehört auch Tritosulfuron der Formel Ia, das ein besonders bevorzugter Sulfonylharnstoff im Sinne der erfindungsgemäßen Festformulierung ist.

Formulierungen auf der Basis von Sulfonylharnstoffen sind beispielsweise aus der EP-A 0859 548 und der EP-A 0955 809 bekannt.

Aus der Literatur ist bekannt, daß Formulierungen, die Sulfonylharnstoffe enthalten, bezüglich der Stabilität der Wirkstoffe problematisch sind, da der Wirkstoff sich unter ungünstigen Bedingungen im Lauf der Zeit zersetzen kann. Die gewünschte herbizide Wirkung ist dann nicht mehr gegeben. Die Tendenz zur Zersetzung ist auch hinsichtlich der Registrierungsanforderungen problematisch, da bei der Registrierung bestimmte Mindestanforderungen an die Stabilität von PS-Wirkstoffen in Formulierungen gestellt werden.

In der JP-A 62/084004 wird die Verwendung von Calciumcarbonat und Natrium-tripolyphosphat zur Stabilisierung von Sulfonharnstoff enthaltenden Formulierungen beschrieben.

Die JP-A 63/023806 beschreibt eine Problemlösung durch Verwendung spezieller Trägerstoffe und Pflanzenöle zur Herstellung fester Sulfonylharnstoff-haltiger Formulierungen. Die JP-A 08/104603 beschreibt ähnliche Effekte bei der Verwendung von epoxydierten natürlichen Ölen. Beiden vorstehend genannten Anmeldung haben als gemeinsames Merkmal die Inkorporation von Pflanzenölen in der Festformulierung, um neben einer verbesserten Stabilität die wirkungssteigernden Effekte dieser als Adjuvantien wirksamen Stoffe zu nutzen.

Bei der Einarbeitung von Pflanzenölen in flüssige Formulierungen (in der Regel Suspensionskonzentrate) werden ähnliche Effekte ausgenutzt (vgl. EP-A 313317 und EP-A 554015).

Die Tendenz zur Zersetzung von Tritosulfuron der Formel Ia kann beispielsweise dadurch erkannt werden, daß der Gehalt an Wirkstoff abnimmt oder der Gehalt eines Zersetzungsproduktes, wie beispielsweise 2-Amino-4-methoxy-6-trifluormethyltriazin (AMTT) der Formel A, 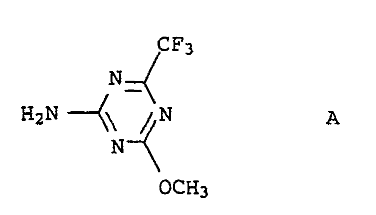 zunimmt.

Aus der EP-A 0124 295 ist bekannt, daß stabile wäßrige Formulierungen bestimmter Sulfonylharnstoffe dadurch erhalten werden können, daß wäßrigen Suspensionen der Wirkstoffe landwirtschaftlich brauchbare Salze von Carbon- oder anorganischen Säuren, deren pH zwischen 6 und 10 liegt, zugesetzt werden. In der EP-A 0124 295 werden ausschließlich wäßrige Zusammensetzungen beschrieben.

Aufgabe der vorliegenden Erfindung war es, ein Verfahren zur Herstellung von Festformulierungen mit Sulfonylharnstoffen als Wirkstoffe zur Verfügung zu stellen, deren Lagerstabilität deutlich verbessert ist gegenüber den Festformulierungen des Standes der Technik.

Diese Aufgabe wurde erfindungsgemäß gelöst durch ein Verfahren zur Herstellung einer herbiziden Festformulierung, enthaltend
a) ein Herbizid aus der Gruppe der Sulfonylharnstoffe oder deren landwirtschaftlich brauchbaren Salze,
b) gegebenenfalls ein weiteres oder mehrere Herbizide,
c) gegebenenfalls einen Safener,
d) einen oder mehrere Formulierungshilfsstoffe,
dadurch gekennzeichnet, daß man den Sulfonylharnstoff a) gegebenenfalls mit einem weiteren oder mehreren Herbiziden b) und ggf. einem Safener c) und einem oder mehreren Formulierungshilfsstoffen d) in Wasser zu einer Suspension suspendiert, die Suspension durch Zugabe einer Säure oder Base auf einen pH-Wert von 6,5 bis 8 einstellt und zur Festformulierung trocknet.

Als Sulfonylharnstoffe a) kommen generell Verbindungen mit der Struktureinheit 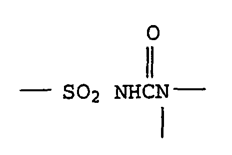 in Betracht, insbesondere mit der Struktureinheit 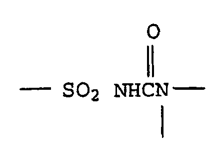 (Pyrimidyl oder Triazinyl)
oder der Struktureinheit

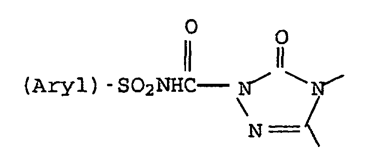

Bevorzugt werden Sulfonylharnstoffe der Formel I verwendet, 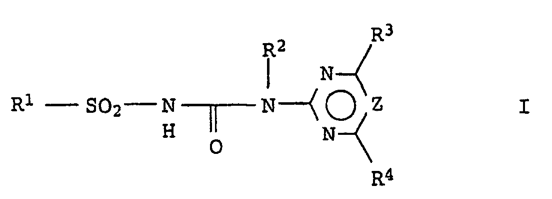 in der die Substituenten die folgende Bedeutung haben:
- R¹: N- (C₁-C₄-Alkyl)-N-(C₁-C₄-alkylsulfonyl)amino oder einen aromatischen oder heteroaromatischen Ring, ausgewählt aus der Gruppe bestehend aus Phenyl, Benzyl; 1H-Pyrazol-5-yl, Pyridin-2-yl, Thiophen-3-yl und Imidazo[1,2-a]-pydridin-3-yl, wobei der aromatische Ring gewünschtenfalls ein bis drei Substituenten tragen kann, ausgewählt aus der Gruppe bestehend aus Halogen, C₁-C₄-Alkyl, C₁-C₄-Halogenalkyl, C₁-C₄-Alkoxy, C₁-C₄-Halogenalkoxy, C₁-C₄-Alkoxy-C₁-C₄- alkyl, Carboxyl, C₁-C₄-Alkoxycarbonyl, 3-Oxetanyloxycarbonyl, Aminocarbonyl, C₁-C₄-Alkylaminocarbonyl, Di-(C₁-C₄-alkyl)aminocarbonyl, C₁-C₄-Alkylsulfonyl, Formylamino, C₁-C₄-Alkylcarbonylamino, (C₁-C₄-Alkylcarbonylamino)-C₁-C₄-alkyl, C₁-C₄-Alkylsulfonylamino, (C₁-C₄-Alkylsulfonylamino)-C₁-C₄-alkyl.
- R²: Wasserstoff oder Methyl
- R³ und R⁴: unabhängig voneinander Halogen, C₁-C₄-Alkyl, C₁-C₄-Halogenalkyl, C₁-C₄-Alkoxy, C₁-C₄-Halogenalkoxy, Amino, C₁-C₄-Alkylamino, Di-(C₁-C₄-alkyl)amino
- Z: N, CH
oder deren landwirtschaftlich brauchbaren Salze.

Besonders bevorzugte Sulfonylharnstoffe der Formel I sind
ACC 322140;
Amidosulfuron;
Azimsulfuron (N-[[(4,6-dimethoxy-2-pyrimidinyl)amino]-carbonyl]-1-methyl-4- (2-methyl-2H-tetrazol-5-yl)-1H-pyrazol-5-sulfonamid);
Bensulfuron-methyl (Methyl 2-[[[[[(4,6-dimethoxy-2-pyrimidinyl)-amino]-carbonyl]amino]sulfonyl]methyl]benzoat);
Ethyl 2-[[[[(4-chloro-6-methoxy-2-pyrimidinyl)-amino]carbonyl]amino]sulfonyl]benzoat(Chlorimuron ethyl); 2-Chloro-N-[[(4-methoxy-6-methyl-1,3,5-triazin-2-yl)amino]carbonyl]benzolsulfonamid(Chlorsulfuron);
Chlorsulfoxim;
Cinosulfuron;
Cyclosulfamuron;
Ethametsulfuron-methyl (Methyl 2-[[[[(4-ethoxy-6-(methylamino)-1,3,5-triazin-2-yl]amino]carbonyl]amino]sulfonyl]-benzoat);
Ethoxysulfuron;
Flazasulfuron;
Flupyrsulfuron (Methyl 2-[[[[(4,6-dimethoxy-2-pyrimidinyl)-amino]-carbonyl]amino]sulfonyl]-6-(trifluormethyl) -3-pyridincarboxylat);
Halosulfuron-methyl ;
Imazosulfuron;
Methyl 2-[[[[(4-methoxy-6-methyl-1,3,5-triazin-2-yl)amino]carbonyl]amino]sulfonyl]benzoat(Metsulfuron methyl);
Nicosulfuron (2-[[[[(4,6-dimethoxy-2-pyrimidinyl)amino]-carbonyl]amino]sulfonyl]-N,N-dimethyl-3-pyridincarboxamid); Oxasulfuron;
Primisulfuron (Methyl 2-[[[[[4,6-bis(difluormethoxy)-2-pyrimidinyl]amino]carbonyl]amino]sulfonyl]benzoat);
Prosulfuron;
Pyrazosulfuron-ethyl (Ethyl 5-[[[[(4,6-dimethoxy-2-pyrimidinyl)-amino]-carbonyl]amino]sulfonyl]-1-methyl-1H-pyrazol-4-carboxylat) ;
Rimsulfuron (N-[[(4,6-dimethoxy-2-pyrimidinylamino]carbonyl]-3-(ethylsulfonyl)-2-pyridinsulfonamid); Sulfosulfuron;
Sulfometuron-methyl (Methyl 2-[[[[(4,6-dimethyl-2-pyrimidinyl)-amino]-carbonyl]amino]sulfonyl]benzoat();
Thifensulfuron-methyl (Methyl-3-[[[[(4-methoxy-6-methyl-1,3,5-triazin-2-yl)amino]carbonyl]amino]sulfonyl]-2-thiophencarboxylat);
2-(2-Chlorethoxy)-N-[[(4-methoxy-6-methyl-1,3,5-triazin-2-yl)-amino]carbonyl]benzolsulfonamid (Triasulfuron);
Tribenuron-methyl (Methyl 2-[[[[N-(4-methoxy-6-methyl-1,3,5-triazin-2-yl)-N-methylamino]carbonyl]amino]sulfonyl]benzoat); Triflusulfuron-methyl (Methyl 2-[[[[[4-(dimethylamino)-6-(2,2,2-trifluoroethoxy)-1,3,5-triazin-2-yl]amino]-carbonyl]-amino]sulfonyl]-3-methylbenzoat) und
Tritosulfuron (N[[[4-methoxy-6-(trifluoromethyl)-1,3,5-triazin-2-yl]amino]carbonyl]-2-(trifluoromethyl)benzenesulfonamide) der Formel Ia, 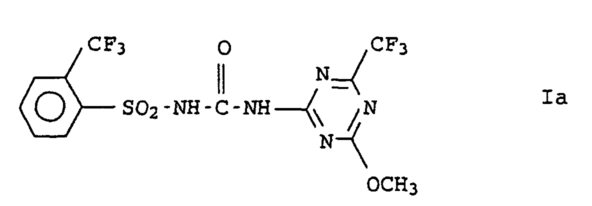 und Tritosulfuron-Natriumsalz (N-[[[4-methoxy-6-(trifluoromethyl)-1,3,5-triazin-2-yl]amino]carbonyl]-2-(trifluoromethyl)benzenesulfonamide,monosodium salt) der Formel Ia'

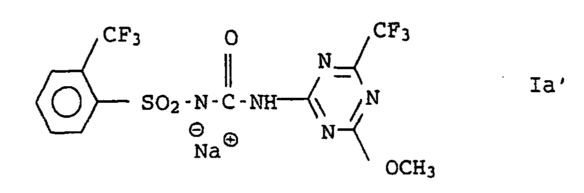

Besonders bevorzugt sind Tritosulfuron und Tritosulfuron-Natriumsalz.

Der Anteil der Sulfonylharnstoffe a) oder ihrer landwirtschaftlich brauchbaren Salze liegt zwischen 0,5 und 85 Gew.-%, vorzugsweise zwischen 25 und 75 Gew.-%, bezogen auf die Festformulierung.

Gegebenenfalls kann ein weiteres oder mehrere Herbizide b) im erfindungsgemäßen verfahren mitverwendet werden. Geeignete Herbizide b) sind beispielsweise Cinidon-ethyl, Florasulam, Flucarbazon, Procarbazon, Bentazon, Dicamba, MCPA, Mecoprop-P, Clefoxidim, Cycloxidim und deren landwirtschaftlich brauchbaren Salze.

Besonders bevorzugt sind Cinidon-ethyl, Flucarbazon, Procarbazon und Dicamba.

Die Mitverwendung der Herbizide b) ist optional. Werden sie mitverwendet, liegt ihr Anteil oder der ihrer landwirtschaftlich brauchbaren Salze zwischen 0,5 und 75 Gew.-%, bezogen auf die Festformulierung.

Gegebenenfalls kann im erfindungsgemäßen Verfahren auch ein Safener c) mitverwendet werden. Geeignete Safener c) sind beispielsweise Cloquintocet, Cloquintocet-mexyl, Dicyclonon, Furilazol, Fenchlorazol, Fenchlorazol-ethyl, Mefenpyr, Mefenpyr-diethyl, Isoxadifen, Isoxadifen-ethyl und deren landwirtschaftlich brauchbaren Salze.

Besonders bevorzugt sind Dicyclonon, Isoxadifen und Isoxadifen-ethyl.

Die Mitverwendung der Safener c) ist optional. Werden sie mitverwendet, liegt ihr Anteil oder der ihrer landwirtschaftlich brauchbaren Salze zwischen 0,5 und 50 Gew.-%, bezogen auf die Festformulierung..

Neben den vorstehend beschriebenen Komponenten a), b) und c) werden beim erfindungsgemäßen Verfahren noch Formulierungshilfsmittel in einer Menge von 15 bis 99,5 Gew.-% mitverwendet.

Als oberflächenaktive Stoffe kommen dabei die Alkali-, Erdalkalioder Ammoniumsalze von aromatischen Sulfonsäuren, z.B. Lignin-, Phenol-, Naphthalin- und Dibutylnaphthalinsulfonsäure, sowie von Fettsäuren, Alkylpolyglykoside, Kondensationsprodukte von sulfoniertem Naphthalin und seiner Derivate mit Formaldehyd, Kondensationsprodukte des Naphtalins bzw. der Naphthalinsulfonsäuren mit Phenol und Formaldehyd, Kondensationsprodukte des Phenols oder der Phenolsulfonsäure mit Formaldehyd, Kondensationsprodukte des Phenols mit Formaldehyd und Natriumsulfit, Polyoxyethylenoctylphenolether, ethoxyliertes Isooctyl-, Octyl- oder Nonylphenol, Tributylphenylpolyglykolether, Alkylarylpolyetheralkohole, Isotridecylalkohol, Fettalkohol/Ethylenoxid-Kondensate, ethoxyliertes Rizinusöl, Polyoxyethylenalkylether, ethoxylierte Triarylphenole, Salze phosphatierter Triarylphenolethoxylate Polyoxypropylenalkylether, Laurylalkoholpolyglykoletheracetat, Sorbitester, Ligninsulfit-Ablaugen oder Methylcellulose oder deren Mischungen in Betracht.

Bei Mitverwendung oberflächenaktiver Stoffe liegt deren Anteil im allgemeinen im Bereich von 0,5 bis 50 Gew.%, bezogen auf das Gesamtgewicht der festen Mischung.

Als Trägerstoffe eignen sich beispielsweise Mineralerden wie Kieselsäuren, Kieselgele, Silikate, Talkum, Kaolin, Attaclay, Kalkstein, Kreide, Löß, Ton, Dolomit, Diatomeenerde, Calciumsulfat, Magnesiumsulfat, Magnesiumoxid, gemahlene Kunststoffe, Düngemittel wie Ammoniumsulfat, Ammoniumphosphat, Ammoniumnitrat, Thioharnstoff und Harnstoff, pflanzliche Produkte wie Getreidemehle, Baumrinden-, Holz- und Nußschalenmehl, Cellulosepulver, Attapulgite, Montmorillonite, Glimmer, Vermiculite, synthetische Kieselsäuren und synthetische Calciumsilicate oder deren Mischungen.

Als weitere Zusatzstoffe in an sich üblichen Mengen können ferner eingesetzt werden:

Bindemittel, wie:
Polyvinylpyrrolidon, Polyvinylalkohol, partiell hydrolysiertes Polyvinylacetat, Carboxymethylcellulose, Stärke, Vinylpyrrolidon/Vinylacetat-Copolymere und Polyvinylacetat oder deren Mischungen;

Entschäumer, wie:
Silikonemulsionen, langkettige Alkohole, Phosphorsäureester, Acetylendiole, Fettsäuren oder fluororganische Verbindungen,
   und

Komplexbildner, wie:
Salze der Ethylendiamintetraessigsäure (EDTA), Salze der Trinitrilotriessigsäure oder Salze von Polyphosphorsäuren oder deren Mischungen.

Beim erfindungsgemäßen Verfahren wird der Sulfonylharnstoff a) mit ggf. einem oder mehreren Herbiziden b) und ggf. einem Safener c) und einem oder mehreren Formulierungshilfsstoffen d) in Wasser zu einer Suspension suspendiert, die Suspension durch Zugabe einer Säure oder Base auf einen pH-Wert von 6,5 bis 8 eingestellt und zur Festformulierung getrocknet.

Die Herstellung der Suspension erfolgt in einem Rührbehälter durch Rühren der Komponenten und Vermahlung in einer Perlmühle.

Die entstandene Suspension wird durch Zugabe einer Säure oder Base auf einen pH-Wert von 6,5 bis 8 eingestellt. Bevorzugt wird ein pH-Wert von 6,5 bis 7,5 und besonders bevorzugt von 6,8 bis 7,2 eingestellt.

Geeignete Säuren sind anorganische und organische Säuren wie beispielsweise Schwefelsäure, Salzsäure oder p-Toluolsulfonsäure.

Geeignete Basen sind Alkali- und Erdalkalihydroxide, Ammoniak und Amine. Bevorzugt wir NaOH verwendet.

Aus der entstandenen Suspension können die Festformulierungen nach mehreren Verfahren hergestellt werden.

Als bevorzugte Herstellverfahren für die genannten Festformulierungen sind die Sprühtrocknung und die Wirbelschichtagglomeration zu nennen.

Besonders geeignet ist die Wirbelschichtgranulation (WSG). Je nach gewünschter Zusammensetzung der Festformulierung wird die Suspension, die alle Rezepturbestandteile enthält, in einer WSG-Apparatur versprüht und agglomeriert.

Im allgemeinen erfolgt im Zuge der Wirbelschichtgranulierung eine ausreichende Trocknung des Granulats. Es kann jedoch vorteilhaft sein, der Granulation einen separaten Trocknungsschritt im gleichen oder in einem separaten Trockner nachzuschalten. Im Anschluß an die Granulation/Trocknung wird das Produkt abgekühlt und gesiebt.

Als Granulierflüssigkeit eignet sich Wasser. Weiterhin geeignet sind wässrige Lösungen von anorg. Salzen, nichtionischen Tensiden, anionischen Tensiden, Lösungen von Bindemitteln wie Polyvinylpyrrolidon, Polyvinylalkohol, Carboxymethylcellulose, Stärke, Vinylpyrrolidin/Vinylacetat-Copolymere, Zucker, Dextrin oder Polyethylenglykol.

Die nach dem erfindungsgemäßen Verfahren hergestellten Festformulierungen können in Form von Pulver, Granulat, Briketts, Tabletten und ähnliche Formulierungsvarianten hergestellt werden. Neben Pulvern sind dabei Granulate besonders bevorzugt. Bei den Pulvern kann es sich um wasserlösliche oder wasserdispergierbare Pulver handeln. Bei den Granulaten kann es sich um wasserlösliche oder wasserdispergierbare Granulate zum Einsatz in der Spritzapplikation oder um sog. Streugranulate zur Direktapplikation handeln. Die mittlere Teilchengröße der Granulate liegt im allgemeinen zwischen 200 µm und 2 mm.

Die erhaltenen Granulatformulierungen sind staubfreie, freifließende, nicht verbackende Produkte, die in kaltem Wasser gut löslich bzw. dispergierbar sind.

Aufgrund ihrer Eigenschaften können die Produkte leicht in größeren Mengen abgefüllt werden. Neben Gebinden wie Kunststoff-, .Papier-, Laminatsäcken oder Beuteln können sie in Kartons oder anderen Bulk-Containern gehandhabt werden Um eine Exposition des Anwenders weiter zu vermeiden, ist es möglich, die Produkte in wasserlöslichen Folienbeuteln, wie z.B. Polyvinylalkohol-Folienbeuteln, zu verpacken, die direkt in den Spritztank gegeben werden und sich dort auflösen. Für solche wasserlöslichen Folien können eingesetzt werden u.a. Polyvinylalkohol oder CelluloseDerivaten wie Methylcellulose, Methyl-hydroxypropyl-cellulose oder Carboxymethylcellulose. Durch Portionierung in anwendungsgerechter Größe kommt der Anwender nicht mehr mit dem Produkt in Berührung. Vorzugsweise werden die wasserlöslichen Beutel in einer wasserdampfundurchlässigen äußere Hülle wie PolyethylenFolie, polyethylen-laminiertes Papier oder Alufolie verpackt.

Die nach dem erfindungsgemäßen Verfahren hergestellten Festformulierungen sind lagerstabil. Nach einem von den Zulassungsbehörden vorgeschriebenen Lagerungstests erfolgt die Lagerung 14 Tage bei 54°C. Die Abnahme des Wirkstoffgehalts läßt sich im Beispiel des Tritosulfons durch die Zunahme des Gehalts des Zersetzungsprodukts AMTT ermitteln, das sich empfindlich bestimmen läßt.

Die nachstehende Tabelle erläutert die in den Beispielen eingesetzten Komponenten.

**Tabelle 1**

| Name | chem. Bezeichnung | Bezugsquelle |
|---|---|---|
| Tamol®NH | Naphthalinsulfonsäure-Formaldehyd-Kondensat | BASF AG |
| Ufoxane®3A | Natrium-Ligninsulfonat | Borregaard |
| Antischaummittel SRE® | Silikonölemulsion | Wacker-Chemie |
| Reax® 88 A | Natrium-Ligninsulfonat | Westvaco |

### Verfahrensbeispiele

### Beispiel 1

Eine Mischung bestehend aus

| | |
|---|---|
| 1100 g | destilliertem Wasser |
| 7,6 g | Antischaummittel SRE |
| 212,5 g | Reax 88 A |
| 653g | Tritosulfuron techn. |

wurde gemischt und in einer Perlmühle vermahlen. Die entstandene Suspension wurde mit wässriger Natronlauge (25%) auf den gewünschten pH-Wert von 5.1, 6, 7, 8 und 9 eingestellt. Danach wurde die Suspension auf Petrischalen aufgegeben und im Vakuumtrockenschrank bei 70°C Trocknungstemperatur getrocknet. Die getrocknete Schicht wurde mittels eines Schabers aus der Petrischale ausgekratzt und durch ein 0,5 mm Sieb gedrückt. Die Feinteile wurden mittels eines 0,1 mm Siebes abgetrennt. Das erhaltene Produkt wurde auf Wirkstoffstablilität geprüft.

### Beispiel 2

Eine Mischung bestehend aus

| | |
|---|---|
| 203,2 g | Tritosulfuron techn. |
| 122,3 g | Flucarbazon-Natrium techn. |
| 4 g | Antischaummittel SRE |
| 55,1 g | Tamol NH |
| 110,2 g | Ufoxane 3A |
| 650 g | destilliertem Wasser |

wurde gemischt und in einer Perlmühle vermahlen. Die entstandene Suspension wurde mit wässriger Natronlauge (25%) auf den gewünschten pH-Wert von 6,5 und 7,0 eingestellt. Danach wurde die Suspension auf Petrischalen aufgegeben und im Vakuumtrockenschrank bei 70°C Trocknungstemperatur getrocknet. Die getrocknete Schicht wurde mittels eines Schabers aus der Petrischale ausgekratzt und durch ein 0,5 mm Sieb gedrückt. Die Feinteile wurden mittels eines 0,1 mm Siebes abgetrennt. Das erhaltene Produkt wurde auf Wirkstoffstablilität geprüft.

### Beispiel 3

Eine Mischung bestehend aus

| | |
|---|---|
| 101,6 g | Tritosulfuron |
| 528,6 g | Dicamba techn. |
| 6,4 g | Antischaumemulsion SRE |
| 102,7 g | Reax 88A |
| 637,9 g | destilliertem Wasser |

wurde in einem Rührbehälter gemischt. Zuerst wurde das Wasser und Reax 88A vorgelegt und das Dicamba eingetragen. Durch Zugabe von wässriger Natronlauge (25%) wurde das Dicamba zu einer Lösung umgesetzt. Danach wurden die restlichen Bestandteile eingemischt und die Suspersion in einer Perlmühle vermahlen.

Die entstandene Suspersion wurde mit wässriger Natronlauge (25%) auf den gewünschten pH-Wert von 6, 7, 8 und 9 eingestellt. Danach wurde diese Suspension auf Petrischalen aufgegeben und im Vakuumtrockenschrank bei 70°C Trocknungstemperatur getrocknet. Die getrocknete Schicht wurde mittels eines Schabers aus der Petrischale ausgekratzt und durch ein 0,5 mm Sieb gedrückt. Die Feinteile wurden mittels eines 0,2 mm Siebs abgetrennt. Das erhaltene Produkt wurde auf Wirkstoffstabilität geprüft.

### Prüfmethoden

Der Wirkstoffgehalt und der AMTT-Gehalt der Formulierungen wurden jeweils mittels quantitativer HPLC bestimmt. Zur Untersuchung der Lagerstabilität wurden Proben der jeweiligen Formulierung gemäß den Beispielen 1-3 für 14 d in fest verschlossenen Glasgefäßen bei 54°C gelagert. Anschließend wurden die Proben untersucht und mit dem Vergleichswert zu Beginn der Lagerung (Nullwert) verglichen. Der Wirkstoffgehalt ist jeweils als relativer Anteil bezogen auf den Nullwert (in Prozent) angegeben. Die Lagerversuche wurden in Anlehnung an die Methode CIPAC MT 46 durchgeführt. Dabei wird die Lagerzeitstabilität eines Produkts durch Kurzlagerung bei erhöhter Temperatur abgeschätzt.

**Tabelle 2**

| Beispiel 1 | Herstellung | | Lagerung | Bemerk. |
|---|---|---|---|---|
| PH Suspension | Wirkststoffe | Konz. Gew.-% | 14 d, 54°C Gew.-% | |
| 5,1 | Tritosulfuron | 74,2 | 99,3 (rel.) | |
| | AMTT | 0,03' | 0,249 | |
| 6 | Tritosulfuron | 72,3 | 99,9 (rel.) | |
| | AMTT | 0,03 | 0,250 | |
| 7 | Tritosulfuron | 71,7 | 100,8 (rel.) | |
| | AMTT | 0,033 | 0,178 | |
| 8 | Tritosulfuron | 67,5 | 100,5 (rel.) | Susp. ist |
| | AMTT | 0,026 | 0,056 | hochviskos |
| 9 | Tritosulfuron | 72,4 | 97,7 (rel.) | Susp. ist |
| | AMTT | 0,035 | 0,234 | hochviskos |

**Tabelle 3**

| Beispiel 3 | Herstellung | | Lagerung | Bemerk. |
|---|---|---|---|---|
| PH Suspension | Wirkststoffe | Konz. Gew.-% | 14 d, 54°C Gew.-% | |
| 6,5 | Tritosulfuron | 40,5 | 98,8 (rel.) | |
| | AMTT | 0,025 | 0,164 | |
| | Flucarbazon-Natrium | 24,1 | 98,8 (rel.) | |
| 7,0 | Tritosulfuron | 41,1 | 100 (rel.) | |
| | AMTT | 0,019 | 0,065 | |
| | Flucarbazon-Natrium | 24,3 | 99,5 (rel.) | |

**Tabelle 4**

| Beispiel 4 | Herstellung | | Lagerung | Bemerk. |
|---|---|---|---|---|
| PH Suspension | Wirkststoffe | Konz. Gew.-% | 14 d, 54°C Gew.-% | |
| 6 | Tritosulfuron | 11,9 | 91,3 (rel.) | |
| | AMTT | 0,009 | 0,470 | |
| | Dicamba | 60,4 | 100 (rel.) | |
| 7 | Tritosulfuron | 11,9 | 99,7 (rel.) | |
| | AMTT | 0,007 | 0,011 | |
| | Dicamba | 58,7 | 100 (rel.) | |

| Beispiel 4 | Herstellung | | Lagerung | Bemerk. |
|---|---|---|---|---|
| PH Suspension | Wirkststoffe | Konz. Gew.-% | 14 d, 54°C Gew.-% | |
| 8 | Tritosulfuron | 11,3 | 98,8 (rel.) | Susp. wird |
| | AMTT | 0,007 | 0,007 | hochviskos |
| | Dicamba | 58,5 | 100 (rel.) | |
| 9 | Tritosulfuron | 10,4 | 102,6 (rel.) | Susp. wird |
| | AMTT | 0,006 | 0,007 | hochviskos |
| | Dicamba | 58,0 | 101,9 (rel.) | |

Die Werte der Tabellen 2 bis 4 zeigen deutlich, daß die nach dem erfindungsgemäßen Verfahren hergestellten Festformulierungen lagerstabil sind, wenn der pH der Suspersion oberhalb 6 liegt. Ab pH 8 wird die Suspension hochviskos, so daß eine Weiterverarbeitung erschwert ist.

## Patentansprüche

1. Verfahren zur Herstellung einer herbiziden Festformulierung, enthaltend
a) ein Herbizid aus der Gruppe der Sulfonylharnstoffe oder deren landwirtschaftlich brauchbaren Salze,
b) gegebenenfalls ein weiteres oder mehrere Herbizide,
c) gegebenenfalls einen Safener,
d) einen oder mehrere Formulierungshilfsstoffe,
**dadurch gekennzeichnet, daß** man den Sulfonylharnstoff a) gegebenenfalls mit einem weiteren oder mehreren Herbiziden b) und ggf. einem Safener c) und einem oder mehreren Formulierungshilfsstoffen d) in Wasser zu einer Suspension suspendiert, die Suspension durch Zugabe einer Säure oder Base auf einen pH-Wert von 6,5 bis 8 einstellt und zur Festformulierung trocknet.

2. Verfahren nach Anspruch 1, **dadurch gekennzeichnet, daß** man als Herbizid a) einen Sulfonylharnstoff der Formel I verwendet, 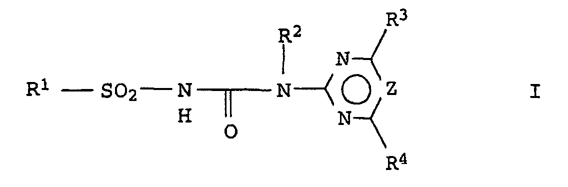 in der die Substituenten die folgende Bedeutung haben:
R¹ N-(C₁-C₄-Alkyl)-N-(C₁-C₄-alkylsulfonyl)amino oder einen aromatischen oder heteroaromatischen Ring, ausgewählt aus der Gruppe bestehend aus Phenyl, Benzyl, 1H-Pyrazol-5-yl, Pyridin-2-yl, Thiophen-3-yl und Imidazo[1,2-a]pydridin-3-yl, wobei der aromatische Ring gewünschtenfalls ein bis drei Substituenten tragen kann, ausgewählt aus der Gruppe bestehend aus Halogen, C₁-C₄-Alkyl, C₁-C₄-Halogenalkyl, C₁-C₄-Alkoxy, C₁-C₄-Halogenalkoxy, C₁-C₄-Alkoxy-C₁-C₄-alkyl, Carboxyl, C₁-C₄-Alkoxycarbonyl, 3-Oxetanyloxycarbonyl, Aminocarbonyl, C₁-C₄-Alkylaminocarbonyl, Di-(C₁-C₄-alkyl)aminocarbonyl, C₁-C₄-Alkylsulfonyl, Formylamino, C₁-C₄-Alkylcarbonylamino, (C₁-C₄-Alkylcarbonylamino)-C₁-C₄-alkyl, C₁-C₄-Alkylsulfonylamino, (C₁-C₄-Alkylsulfonylamino)-C₁-C₄-alkyl;
R² Wasserstoff oder Methyl;
R³ und R⁴ unabhängig voneinander Halogen, C₁-C₄-Alkyl, C₁-C₄-Halogenalkyl, C₁-C₄-Alkoxy, C₁-C₄-Halogenalkoxy, Amino, C₁-C₄-Alkylamino, Di-(C₁-C₄-alkyl)amino;
Z N, CH;
oder deren landwirtschaftlich brauchbaren Salze.

3. Verfahren nach einem der Ansprüche 1 bis 2, **dadurch gekennzeichnet, daß** man als Herbizid a) einen Sulfonylharnstoff verwendet, ausgewählt aus der Gruppe bestehend aus Tritosulfuron, Bensulfuron-methyl, Chlorimuron-ethyl, Chlorsulfuron, Cinosulfuron, Halosulfuron-methyl, Ethametsulfuron-methyl, Flazasulfuron, Imazosulfuron, Metsulfuron-methyl, Nicosulfuron, Primisulfuron-methyl, Pyrazosulfuron-ethyl, Rimsulfuron, Sulfometuron-methyl, Thifensulfuron-methyl, Triasulfuron, Tribenuron-methyl, Triflusulfuron-methyl, Prosulfuron, Ethoxysulfuron, Azimsulfuron, Oxasulfuron, Sulfosulfuron, Iodosulfuron, Foramsulfuron, Trifloxysulfuron, Amidosulfuron, Mesosulfuron, Flupyrsulfuron-methyl, Iodosulfuron-methyl und deren landwirtschaftlich brauchbaren Salze.

4. Verfahren nach Anspruch 3, **dadurch gekennzeichnet, daß** man als Herbizid a) Tritosulfuron oder ein landwirtschaftlich brauchbares Salz davon verwendet.

5. Verfahren nach einem der Ansprüche 1 bis 4, **dadurch gekennzeichnet, daß** man ein Herbizid b) verwendet, ausgewählt aus der Gruppe bestehend aus Cinidon-ethyl, Florasulam, Flucarbazon, Procarbazon, Bentazon, Dicamba, MCPA, Mecoprop-P, Clefoxidim, Cycloxidim und deren landwirtschaftlich brauchbaren Salze.

6. Verfahren nach einem der Ansprüche 1 bis 5, **dadurch gekennzeichnet, daß** man einen Safener c) verwendet, ausgewählt aus der Gruppe bestehend aus Cloquintocet, Cloquintocet-mexyl, Dicyclonon, Furilazol, Fenchlorazol, Fenchlorazol-ethyl, Mefenpyr, Mefenpyr-diethyl, Isoxadifen, Isoxadifen-ethyl und deren landwirtschaftlich brauchbaren Salze.

7. Verfahren nach einem der Ansprüche 1 bis 6, **dadurch gekennzeichnet, daß** man als Formulierungshilfsstoff d) einen festen Trägerstoff verwendet.

8. Verfahren nach einem der Ansprüche 1 bis 7, **dadurch gekennzeichnet, daß** man als Formulierungshilfsstoff d) einen oberflächenaktiven Stoff verwendet.

9. Verfahren nach einem der Ansprüche 1 bis 8, **dadurch gekennzeichnet, daß** man
0,5 bis 85 Gew.-% des Sulfonylharnstoffes a)
0 bis 75 Gew.-% des Herbizids b)
0 bis 50 Gew.-% des Safeners c)
15 bis 99,5 Gew.-% der/des Formulierungshilfsstoffe(s) d) verwendet.

10. Verfahren nach einem der Ansprüche 1 bis 9, **dadurch gekennzeichnet, daß** man die Suspension auf einem pH-Wert von 6,5 bis 7,5 einstellt.

11. Verfahren nach einem der Ansprüche 1 bis 10, **dadurch gekennzeichnet, daß** man die Suspension auf einem pH-Wert von 6,8 bis 7,2 einstellt.

12. Verwendung der herbiziden Festformulierung hergestellt nach dem Verfahren gemäß Anspruch 1 zur Bekämpfung von Schadpflanzen.

## Claims

1. A process for the preparation of a solid herbicidal formulation comprising
a) a herbicide from the group of the sulfonylureas or their agriculturally useful salts,
b) with or without one or more further herbicides,
c) with or without a safener,
d) one or more formulation auxiliaries,
which process comprises suspending the sulfonylurea a) with or without one or more further herbicides b) and with or without a safener c) and one or more formulation auxiliaries d) in water to give a suspension, bringing the suspension to pH 6.5 to 8 by adding an acid or base and drying it to give a solid formulation.

2. A process as claimed in claim 1, wherein the herbicide a) used is a sulfonylurea of the formula I 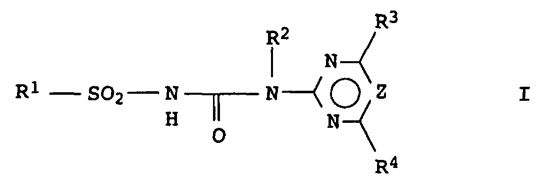 where the substituents have the following meanings:
R¹ is N-(C₁-C₄-alkyl)-N-(C₁-C₄-alkylsulfonyl)amino or an aromatic or heteroaromatic ring selected from the group consisting of phenyl, benzyl, 1H-pyrazol-5-yl, pyridin-2-yl, thiophen-3-yl and imidazo[1,2-a]pydridin-3-yl, it being possible for the aromatic ring optionally to have attached to it one to three substituents selected from the group consisting of halogen, C₁-C₄-alkyl, C₁-C₄-haloalkyl, C₁-C₄-alkoxy, C₁-C₄-haloalkoxy, C₁-C₄-alkoxy-C₁-C₄-alkyl, carboxyl, C₁-C₄-alkoxycarbonyl,
3-oxetanyloxycarbonyl, aminocarbonyl, C₁-C₄-alkylaminocarbonyl, di-(C₁-C₄-alkyl)aminocarbonyl, C₁-C₄-alkylsulfonyl, formylamino, C₁-C₄-alkylcarbonylamino, (C₁-C₄-alkylcarbonylamino)-C₁-C₄-alkyl, C₁-C₄-alkylsulfonylamino, (C₁-C₄-alkylsulfonylamino)-C₁-C₄-alkyl;
R² is hydrogen or methyl;
R³ and R⁴ independently of one another are halogen, C₁-C₄-alkyl, C₁-C₄-haloalkyl, C₁-C₄-alkoxy, C₁-C₄-haloalkoxy, amino, C₁-C₄-alkylamino, di-(C₁-C₄-alkyl)amino;
Z is N, CH;
or their agriculturally useful salts.

3. A process as claimed in claim 1 or 2, wherein the herbicide a) used is a sulfonylurea selected from the group consisting of tritosulfuron, bensulfuron-methyl, chlorimuron-ethyl, chlorsulfuron, cinosulfuron, halosulfuron-methyl, ethametsulfuron-methyl, flazasulfuron, imazosulfuron, metsulfuron-methyl, nicosulfuron, primisulfuron-methyl, pyrazosulfuron-ethyl, rimsulfuron, sulfometuron-methyl, thifensulfuron-methyl, triasulfuron, tribenuron-methyl, triflusulfuron-methyl, prosulfuron, ethoxysulfuron, azimsulfuron, oxasulfuron, sulfosulfuron, iodosulfuron, foramsulfuron, trifloxysulfuron, amidosulfuron, mesosulfuron, flupyrsulfuron-methyl, iodosulfuron-methyl and their agriculturally useful salts.

4. A process as claimed in claim 3, wherein the herbicide a) used is tritosulfuron or one of its agriculturally useful salts.

5. A process as claimed in any of claims 1 to 4, wherein a herbicide b) is used which is selected from the group consisting of cinidon-ethyl, florasulam, flucarbazon, procarbazon, bentazon, dicamba, MCPA, mecoprop-P, clefoxidim, cycloxidim and their agriculturally useful salts.

6. A process as claimed in any of claims 1 to 5, wherein a safener c) is used which is selected from the group consisting of cloquintocet, cloquintocet-mexyl, dicyclonon, furilazole, fenchlorazole, fenchlorazole-ethyl, mefenpyr, mefenpyr-diethyl, isoxadifen, isoxadifen-ethyl and their agriculturally useful salts.

7. A process as claimed in any of claims 1 to 6, wherein the formulation auxiliary d) used is a solid carrier.

8. A process as claimed in any of claims 1 to 7, wherein the formulation auxiliary d) used is a surfactant.

9. A process as claimed in any of claims 1 to 8, wherein
0.5 to 85% by weight of the sulfonylurea a)
0 to 75% by weight of the herbicide b),
0 to 50% by weight of the safener c) and
15 to 99.5% by weight of the formulation auxiliariy/auxiliaries d) are used.

10. A process as claimed in any of claims 1 to 9, wherein the suspension is brought to pH 6.5 to 7.5.

11. A process as claimed in any of clams 1 to 10, wherein the suspension is brought to a pH of 6.8 to 7.2.

12. The use of the solid herbicidal formulation prepared using the process as claimed in claim 1 for controlling harmful plants.

## Revendications

1. Procédé pour la préparation d'une formulation herbicide solide contenant
a) un herbicide choisi parmi le groupe des sulfonylurées ou de leurs sels utilisables en agriculture,
b) le cas échéant, un ou plusieurs herbicides supplémentaires,
c) le cas échéant, un safener,
d) un ou plusieurs adjuvants de formulation,
**caractérisé en ce qu'**on transforme en une suspension dans l'eau la sulfonylurée a), le cas échéant avec un ou plusieurs herbicides supplémentaires b), et le cas échéant avec un safener c) et avec un ou plusieurs adjuvants de formulation d), on règle la suspension par addition d'un acide ou d'une base à une valeur de pH de 6,5 à 8 et on la sèche pour obtenir une formulation solide.

2. Procédé selon la revendication 1, **caractérisé en ce qu'**on utilise, à titre d'herbicide a), une sulfonylurée répondant à la formule I 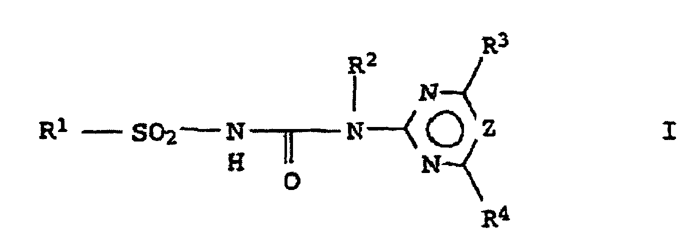 dans laquelle les substituants ont la signification ci-après :
R¹ représente un groupe N-(alkyle en C₁-C₄)-N-(alkyle en C₁-C₄-sulfonyl)amino ou un noyau aromatique ou hétéroaromatique choisi parmi le groupe constitué par un groupe phényle, un groupe benzyle, un groupe 1H-pyrazol-5-yle, un groupe pyridin-2-yle, un groupe thiophén-3-yle et un groupe imidazo[1,2-a]pyridin-3-yle, le noyau aromatique pouvant porter, si on le souhaite, de un à trois substituants choisis parmi le groupe constitué par un atome d'halogène, un groupe alkyle en C₁-C₄, un groupe halogénalkyle en C₁-C₄, un groupe alcoxy en C₁-C₄, un groupe halogénalcoxy en C₁-C₄, un groupe alcoxy en C₁-C₄ alkyle en C₁-C₄, un groupe carboxyle, un groupe alcoxy en C₁-C₄ carbonyle, un groupe 3-oxétanyloxy-carbonyle, un groupe aminocarbonyle, un groupe alkyle en C₁-C₄ aminocarbonyle, un groupe di(alkyle en C₁-C₄)amino-carbonyle, un groupe alkyle en C₁-C₄ sulfonyle, un groupe formylamino, un groupe alkyle en C₁-C₄ carbonylamino, un groupe (alkyle en C₁-C₄ carbonylamino) alkyle en C₁-C₄, un groupe alkyle en C₁-C₄ sulfonylamino, un groupe (alkyle en C₁-C₄ sulfonylamino)alkyle en C₁-C₄;
R² représente un atome d'hydrogène ou un groupe méthyle ;
R³ et R⁴ représentent, indépendamment l'un de l'autre, un atome d'halogène, un groupe alkyle en C₁-C₄, un groupe halogénalkyle en C₁-C₄, un groupe alcoxy en C₁-C₄, un groupe halogénalcoxy en C₁-C₄, un groupe amino, un groupe alkyle en C₁-C₄ amino, un groupe di(alkyle en C₁-C₄)amino ;
Z représente un atome d'azote, un groupe CH ;
ou encore leurs sels utilisables en agriculture.

3. Procédé selon l'une quelconque des revendications 1 à 2, **caractérisé en ce qu'**on utilise, à titre d'herbicide a), une sulfonylurée choisie parmi le groupe constitué par le tritosulfuron, le bensulfuron-méthyl, le chlorimuron-éthyl, le chlorsulfuron, le cinosulfuron, l'halogéno-sulfuron-méthyl, l'étametsulfuron-méthyl, le flazasulfuron, l'imazosulfuron, le metsulfuron-méthyl, le nicosulfuron, le primisulfuron-méthyl, le pyrazosulfuron-éthyl, le rimsulfuron, le sulfometuron-méthyl, le thifensulfuron-méthyl, le triasulfuron, le tribenuron-méthyl, le triflusulfuron-méthyl, le prosulfuron, l'éthoxysulfuron, l'azimsulfuron, l'oxasulfuron, le sulfosulfuron, l'iodosulfuron, le foramsulfuron, le trifloxysulfuron, l'amidosulfuron, le mésosulfuron, le flupyrsulfuron-méthyl, l'iodosulfuron-méthyl, ainsi que leurs sels utilisables en agriculture.

4. Procédé selon la revendication 3, **caractérisé en ce qu'**on utilise, à titre d'herbicide a), du tritosulfuron ou un de ses sels utilisables en agriculture.

5. Procédé selon l'une quelconque des revendications 1 à 4, **caractérisé en ce qu'**on utilise un herbicide b) choisi parmi le groupe constitué par le cinidon-éthyl, le florasulam, le flucarbazon, le procarbazon, le bentazon, le Dicamba, le MCPA, le Mecoprop-P, la cléfoxidime, la cyclodixime, ainsi que leurs sels utilisables en agriculture.

6. Procédé selon l'une quelconque des revendications 1 à 5, **caractérisé en ce qu'**on utilise un safener c) choisi parmi le groupe constitué par le cloquintocet, le cloquintocet-méxyl, le dicyclonon, le furilazol, le fenchlorazol, le fenchlorazol-éthyl, le metfenpyr, le metfenpyr-diéthyl, l'isoxadifen, l'isoxadifen-éthyl, ainsi que leurs sels utilisables en agriculture.

7. Procédé selon l'une quelconque des revendications 1 à 6, **caractérisé en ce qu'**on utilise, à titre d'adjuvant de formulation d), une substance de support solide.

8. Procédé selon l'une quelconque des revendications 1 à 7, **caractérisé en ce qu'**on utilise, à titre d'adjuvant de formulation d), une substance tensioactive.

9. Procédé selon l'une quelconque des revendications 1 à 8, **caractérisé en ce qu'**on utilise,
la sulfonylurée a), à concurrence de 0,5 à 85 % en poids,
l'herbicide b), à concurrence de 0 à 75 % en poids,
le safener c), à concurrence de 0 à 50 % en poids,
le ou les adjuvants de formulation d), à concurrence de 15 à 99,5 % en poids.

10. Procédé selon l'une quelconque des revendications 1 à 9, **caractérisé en ce qu'**on règle la suspension à une valeur de pH de 6,5 à 7,5.

11. Procédé selon l'une quelconque des revendications 1 à 10, **caractérisé en ce qu'**on règle la suspension à une valeur de pH de 6,8 à 7,2.

12. Utilisation de la formulation herbicide solide préparée conformément au procédé selon la revendication 1 pour lutter contre des plantes nuisibles.
